# EUROPEAN PATENT SPECIFICATION

(11) **EP 2 382 544 B1**
(45) Date of publication and mention of the grant of the patent: **28.03.2012**
(21) Application number: 09801705.6
(22) Date of filing: 22.12.2009
(51) Int. Cl.: G06F 11/14

(54) **DETERMINING MODIFIED DATA IN CACHE FOR USE DURING A RECOVERY OPERATION**
BESTIMMEN MODIFIZIERTER DATEN IM CACHE ZUR VERWENDUNG WÄHREND EINER WIEDERHERSTELLUNGSOPERATION
DÉTERMINATION DE DONNÉES MODIFIÉES DANS UNE MÉMOIRE CACHE POUR UNE UTILISATION DURANT UNE OPÉRATION DE REPRISE

(30) Priority: 06.01.2009 US 349460
(43) Date of publication of application: 02.11.2011
(73) Proprietor: International Business Machines Corporation, Armonk, NY 10504 (US)
(72) Inventor: ELLIOTT, John Charles, Tucson Arizona 85744-0002 (US); RINALDI, Brian Anthony, Tucson Arizona 85744-0002 (US); ASH, Kevin John, Tucson Arizona 85744-0002 (US); JONES, Carl Evan, Tucson Arizona 85744-0002 (US)
(74) Representative: Litherland, David Peter
(86) International application number: PCT/EP2009/067770
(87) International publication number: WO 2010/079095

(56) References cited:
- US-A- 4 916 605
- US-A1- 2008 201 523
- US-B1- 6 438 661

## Description

### BACKGROUND OF THE INVENTION

### Field of the Invention

The present invention relates to a method, system, and computer program for determining modified data in cache for use during a recovery operation.

### Description of the Related Art

In a dual cluster system, each cluster includes a processing complex, cache and non-volatile backup storage (NVS). Each cluster is assigned a plurality of volumes, where volumes may be grouped in Logical Subsystems (LSSs). Data being written to a volume may be stored in the cache of the cluster to which the data is assigned. In certain situations, a copy of data in cache is also copied to the NVS of the other cluster to provide a backup copy. In this way, if there is a failure, the modified data in cache is preserved in the other cluster.

During a recovery operation after a failure, the modified data in the NVS not yet destaged may be recovered and destaged from the NVS in a cluster. If one of the NVS's has also failed, then the modified data for the cache in the other cluster cannot be recovered from the NVS. In such case, the recovery operation will have to perform additional recovery operations to determine the modified data that was in the cache.

The document US4916605 teaches the recovery of non-destaged cache data using a backup copy of the non-destaged cache data stored in a separate, battery-powered non-volatile storage, whereby, in response to a power loss, the non-destaged data stored in the nonvolatile storage is destaged after power is restored.

The document US2008201523 teaches recovery of non-destaged cache data at fail-over in a remote copy system comprising a local cluster and a remote cluster, whereby write data is stored in the cache of the local cluster, while also storing a corresponding track ID of the local cluster cache data in a non-volatile storage of the local cluster, the write data being copied to a non-volatile storage of the remote cluster as backup copy.

The document US6438661 teaches recovery of non-destaged modified cache data in that track indications of modified data tracks of the cache is stored in a battery-backed non-volatile storage as a modified data list, whereby the track indications in the modified data list stored in the non-volatile storage are used to rebuild the lost cache data tracks of the cache.

### SUMMARY

As defined in detail in the appended independent claim 1, the invention provides a method of writing data to a storage device in a storage system comprising first and second subsystems, each subsystem including a cache and a backup storage, wherein the backup storage of a first subsystem acts as backup for writes to the cache of a second subsystem not destaged to the storage device, and the backup storage of the second subsystem acts as backup for writes to the cache of the first subsystem not destaged to the storage device, the method comprising: detecting an event during which processing of writes to the storage device is suspended; in response to detecting the event, scanning the caches of the first and second subsystems to determine for each subsystem the data units having modified data; for each subsystem, storing an indication of the data units having the modified data in the backup storage of that subsystem; and using the stored indication of the data units having the modified data in the backup storages during a recovery operation.

Also provided by the invention are a system and a computer program as defined in detail in the appended independent claims 8 and 15.

Preferred features of the method are as defined in the appended dependent claims.

### BRIEF DESCRIPTION OF THE DRAWINGS

A preferred embodiment of the present invention will now be described, by way of example only, and with reference to the following drawings:
FIG. 1 illustrates an embodiment of a computing environment.
FIG. 2 illustrates an embodiment of a modified data list.
FIG. 3 illustrates an embodiment of operations to determine modified data and generate a modified data list in response to detecting an event.
FIG. 4 illustrates an embodiment of operations to use the modified data list during a recovery operation.

### DETAILED DESCRIPTION

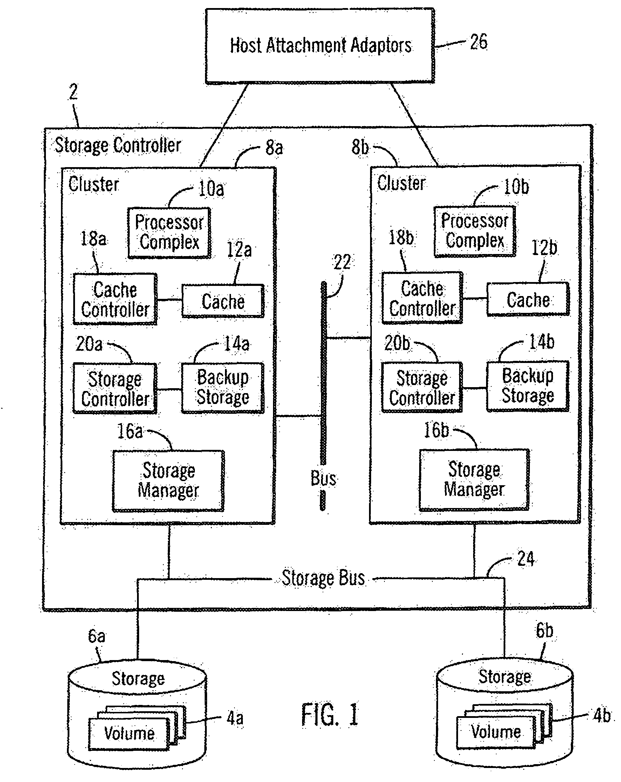

FIG. 1 illustrates an embodiment of a network computing environment. A plurality of hosts (not shown) may submit Input/Output (I/O) requests to a storage controller 2 to access data at volumes 4a, 4b (e.g., Logical Unit Numbers, Logical Devices, Logical Subsystems, etc.) in storages 6a, b. The storage controller 2 includes at least two clusters 8a, 8b. Each cluster 8a, 8b includes a processor complex 10a, 10b, a cache 12a, 12b, and a backup storage 14a, 14b to backup data in the cache 12a, 12b depending on the type of data in the cache 12a, 12b. In certain embodiments, the backup storages 14a, 14b may provide non-volatile storage of data, such as non-volatile backup storages or memory devices. The clusters 8a, 8b receive I/O requests from the hosts and buffer the requests and write data in their respective cache 12a, 12b directed to the storage 6a, 6b. Each cluster 12a, 12b includes storage manager 16a, 16b executed by the processor complexes 10a, 10b to manage I/O requests.

Cache controllers 18a, 18b provide circuitry to manage data in the caches 12a, 12b and backup storage controllers 20a, 20b provide circuitry to manage data in the backup storages 14a, 14b. In one embodiment, the cache controllers 18a, 18b include circuitry and a Direct Memory Access (DMA) engine to copy data directly from the caches 12a, 12b to the cache or backup storage 14a, 14b in the other cluster 8a, 8b. In this way, the processor complexes 10a, 10b may offload data movement operations to their respective cache controllers 18a, 18b.

In one embodiment, the caches 12a, 12b may comprise a volatile storage that is external to the processor complex 10a, 10b or comprise an "on-board" cache of the processor complex 10a, 10b, such as the L2 cache. In one embodiment, the backup storages 14a, 14b may comprise a non-volatile backup storage (NVS), such as a non-volatile memory, e.g., battery backed-up Random Access Memory (RAM), static RAM (SRAM), etc. Alternative memory and data storage structures known in the art may be used for the caches 12a, 12b and backup storages 14a, 14b.

A bus 22 provides a communication interface to enable communication between the clusters 8a, 8b, and may utilize communication interface technology known in the art, such as Peripheral Component Interconnect (PCI) bus or other bus interfaces, or a network communication interface. Further, the bus 22 may comprise a processor Symmetrical MultiProcessor (SMP) fabric comprising busses, ports, logic, arbiter, queues, etc. to enable communication among the cores and components in the processor complexes 10a, 10b

The clusters 8a, 8b are both capable of accessing volumes 4a, 4b in storage systems 6a, 6b over a shared storage bus 24, which may utilize a suitable storage communication interface known in the art. The storage manager 16a, 16b may also maintain an assignment of volumes 4a, 4b to clusters 8a, 8b owning a volume or group of volumes in the attached storages 6a, 6b, such that an owner cluster 8a, 8b handles the writes to those volumes 4a, 4b that cluster owns by caching the write data and executing the write against the volume.

The clusters 8a, 8b in the storage controller 2 comprise separate processing systems, and may be on different power boundaries and implemented in separate hardware components, such as each cluster implemented on a separate motherboard. The storages 6a, 6b may comprise an array of storage devices, such as a Just a Bunch of Disks (JBOD), Direct Access Storage Device (DASD), Redundant Array of Independent Disks (RAID) array, virtualization device, tape storage, flash memory, etc.

The storage managers 16a, 16b may comprise code executed by a processor, such as the processor complex 10a, 10b, or may each be implemented in a dedicated hardware device in their respective cluster 8a, 8b, such as an application specific integrated circuit (ASIC).

Host attachment adaptors 26 provide an interface, such as a Storage Area Network (SAN) interface to the storage controller 2. This is the path the systems being served by the storage controller 2 use to access their data. In certain embodiments, the host adaptors 26 write two copies of the data when a host modifies data. One copy to cache, e.g., 12a, one copy to the backup storage, e.g., 14b, in the other cluster, e.g., 8b. In additional embodiments, the cache controllers 18a, 18b may DMA or directly copy data from their respective caches 12a, 12b over the bus 22 to the cache 12a, 12b or backup storage 14a, 14b in the other cluster 8a, 8b.

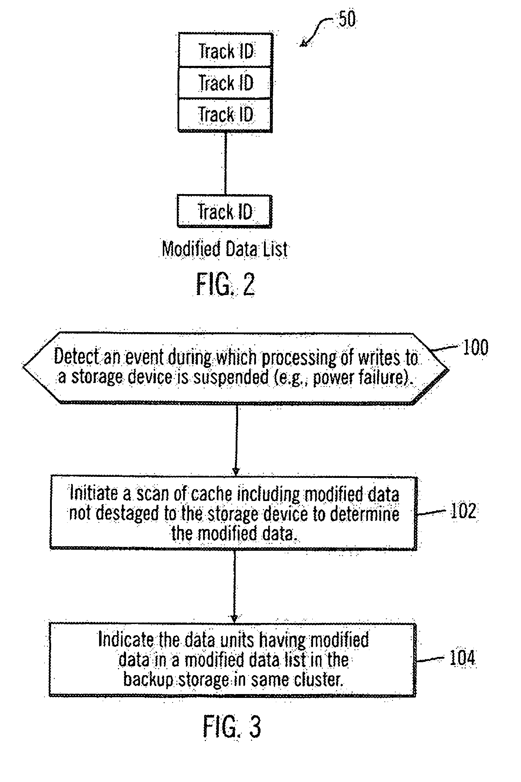

FIG. 2 illustrates an embodiment of a modified data list 50 that each storage manager 16a, 16b generates by scanning the cache 12a, 12b, respectively, to determine modified data in their cache 12a, 12b that has not yet been destaged to the storage 6a, 6b, i.e., dirty data. This information may be determined from cache control blocks maintained by the cache controller 18a, 18b indicating cache entries having dirty or modified data not yet destaged. The storage managers 16a, 16b may each independently generate and store the generated modified data list 50 indicating modified data in the cache 12a, 12b in the same cluster 8a, 8b in the backup storage 14a, 14b. In this way, backup storage 14a stores modified, e.g., dirty data, from the cache 12b in the other cluster 8b and a modified data list 50 indicating data units of modified data in the cache 12a of the same cluster 8a and backup storage 14b stores modified, e.g., dirty data, from the cache 12a in the other cluster 8a and a modified data list 50 indicating data units of modified data in the cache 12b of the same cluster 8b. In certain embodiments, the modified data list 50 has information indicating those data units that were modified, without storing the actual modified data. A data unit of storage may comprise a track, logical block address or any other unit or division of the storage space.

FIG. 3 illustrates an embodiment of operations performed by the storage manager 16a, 16b in each cluster 8a, 8b in response to an event during which host writes to the storage devices 6a, 6b are suspended, such as a power failure or other event. Upon detecting an event (at block 100) resulting in suspension of writes, such as a power failure of the storage controller 2, the storage manager 16a, 16b initiates (at block 102) a scan of the cache 12a, 12b in the cluster 8a, 8b of the storage manager 16a, 16b to determine the modified data, i.e., modified or dirty data for data units in the volumes 4a, 4b that has not been destaged to the storages 6, 6b. As mentioned, the storage manager 16a, 16b may determine the data units, e.g., tracks, having modified data from cache metadata on the content of the cache entries. The storage manager 16a, 16b indicates (at block 104) the data units having modified data in the backup storage 14a, 14b in a modified data list 50 for the cache 12a, 12b in the same cluster 8a, 8b, respectively.

In certain described embodiments, the operations of FIG. 3 are performed in a dual cluster environment. In further embodiments, the operations may be performed by storage managers in environments having more than two clusters and in a single cluster environment.

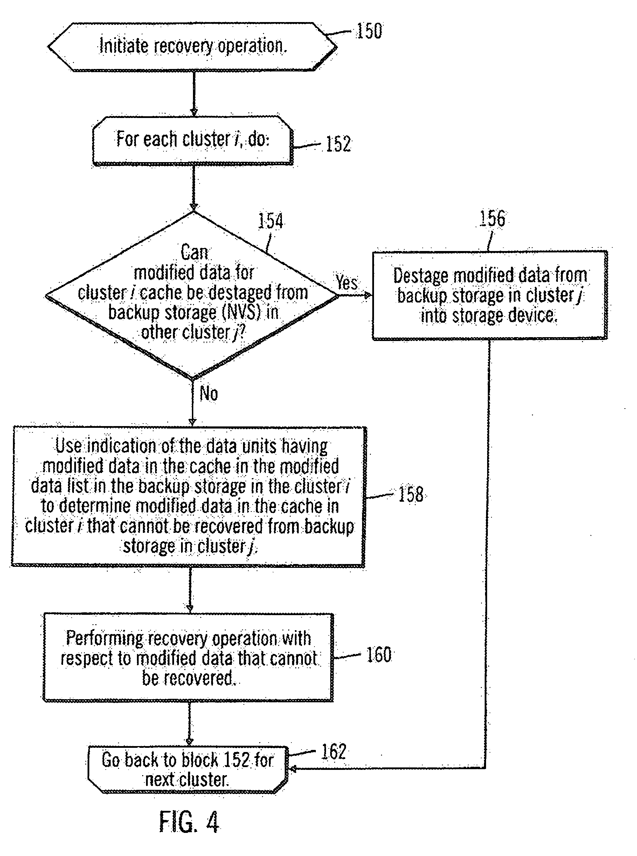

FIG. 4 illustrates an embodiment of operations performed in the storage controller 2 as part of a recovery operation after a failure, such as a power failure to recover any modified data that was in the cache 12a, 12b when the failure occurred. In response to initiating the recovery operation, the storage manager 16a, 16b in each cluster 8a, 8b performs the operations at blocks 152 through 162. At block 154 the storage manager 16a, 16b in cluster *i* determines (at block 154) whether the modified data for cluster i cache can be downloaded from backup storage 14a, 14b in the other cluster j. Thus, the storage manager 16a determines whether the modified data for the cache 12a in cluster 8a can be destaged from the backup storage 14b in the other cluster 8b and the storage manager 16b determines whether the modified data for the cache 12b in cluster 8b can be destaged from the backup storage 14a in the other cluster 8a. If the data can be recovered from the backup storage 14a, 14b in the other cluster 8a, 8b, then the modified data from the backup storage 14a, 14b in cluster j is destaged (at block 156) into storage device 6a, 6b.

If the backup storage 14a, 14b is not available to provide the modified data, then the storage manager 16a, 16b of cluster i uses (at block 158) the indication of the data units having modified data in the cache in the modified data list 50 in the backup storage 14a, 14b in the cluster *i* to determine modified data in the cache 12a, 12b in cluster i that cannot be recovered from backup storage in cluster *j*. For instance, the storage manager 16a determines from the modified data list 50 in backup storage 14a in cluster 8a those data units having modified data in the cache 12a that needs to be recovered and storage manager 16b determines from the modified data list 50 in backup storage 14b in cluster 8b the data units having modified data in the cache 12b that needs to be recovered. The storage manager 16a, 16b in cluster *i* performs (at block 160) a recovery operation with respect to modified data in the cache 12a, 12b indicated in the modified data list 50 that cannot be recovered.

With the described embodiments, at the time of a failure or other event requiring failure handing, such as an event that causes a suspension of Input/Output (I/O) processing, a storage manager 16a, 6b scans the cache 12a, 12b, respectively, for modified data in the cache 12a, 12b that has not been destaged to indicated in a modified data list 50. This information of those data units, such as tracks, having modified data in the modified data list 50 may be used during data recovery operations if the modified data in the cache 12a, 12b of a cluster cannot be recovered from the backup storage 14a, 14b in the other cluster. In certain described embodiments, the formation of the modified data list 50 having information on data units having modified data does not interfere with I/O processing because the determination and indication of modified data does not happen until there is an event resulting in the suspension of writes.

### Additional Embodiment Details

The described operations may be implemented as a method, apparatus or article of manufacture using standard programming and/or engineering techniques to produce software, firmware, hardware, or any combination thereof. The described operations may be implemented as code maintained in a "computer readable medium", where a processor may read and execute the code from the computer readable medium. A computer readable medium may comprise media such as magnetic storage medium (e.g., hard disk drives, floppy disks, tape, etc.), optical storage (CD-ROMs, DVDs, optical disks, etc.), volatile and non-volatile memory devices (e.g., EEPROMs, ROMs, PROMS, RAMs, DRAMs, SRAMs, Flash Memory, firmware, programmable logic, etc.), etc. The code implementing the described operations may further be implemented in hardware logic (e.g., an integrated circuit chip, Programmable Gate Array (PGA), Application Specific Integrated Circuit (ASIC), etc.). Still further, the code implementing the described operations may be implemented in "transmission signals", where transmission signals may propagate through space or through a transmission media, such as an optical fiber, copper wire, etc. The transmission signals in which the code or logic is encoded may further comprise a wireless signal, satellite transmission, radio waves, infrared signals, Bluetooth, etc. The transmission signals in which the code or logic is encoded is capable of being transmitted by a transmitting station and received by a receiving station, where the code or logic encoded in the transmission signal may be decoded and stored in hardware or a computer readable medium at the receiving and transmitting stations or devices. An "article of manufacture" comprises computer readable medium, hardware logic, and/or transmission signals in which code may be implemented. A device in which the code implementing the described embodiments of operations is encoded may comprise a computer readable medium or hardware logic. Of course, those skilled in the art will recognize that many modifications may be made to this configuration without departing from the scope of the present invention, and that the article of manufacture may comprise suitable information bearing medium known in the art.

In the described embodiments, the data stored in the backup storages 14a, 14b corresponding to the data in cache comprised a storage location or identifier of the data in cache or a copy of the data in cache. In alternative embodiments, different types of corresponding data may be maintained in the backup storages.

In the describe embodiments, the copy operations to copy data between the caches 12a, 12b and backup storages 14a, 14b are performed by the cache controllers 18a, 18b.

In alternative embodiments, certain operations described as initiated by the cache controllers 18a, 18b may be performed by the storage manager 16a, 16b or other components in the clusters.

The terms "an embodiment", "embodiment", "embodiments", "the embodiment", "the embodiments", "one or more embodiments", "some embodiments", and "one embodiment" mean "one or more (but not all) embodiments of the present invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

Devices that are in communication with each other need not be in continuous communication with each other, unless expressly specified otherwise. In addition, devices that are in communication with each other may communicate directly or indirectly through one or more intermediaries.

A description of an embodiment with several components in communication with each other does not imply that all such components are required. On the contrary a variety of optional components are described to illustrate the wide variety of possible embodiments of the present invention.

Further, although process steps, method steps, algorithms or the like may be described in a sequential order, such processes, methods and algorithms may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the present invention need not include the device itself.

The illustrated operations of FIGs. 3 and 4 show certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

The foregoing description of various embodiments of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description, but rather by the claims appended hereto. The above specification, examples and data provide a complete description of the manufacture and use of the composition of the invention. Since many embodiments of the invention can be made without departing from the scope of the invention, the invention resides in the independent claims hereinafter appended.

## Claims

1. A method of writing data to a storage device (6a, 6b) in a storage system comprising first and second subsystems (6a, 8a; 6b, 8b), each subsystem including a cache (12a, 12b) and a backup storage (14a, 14b), wherein the backup storage (14a) of a first subsystem (6a, 8a) acts as backup for writes to the cache (12b) of a second subsystem (6b, 8b) not destaged to the storage device, and the backup storage (14b) of the second subsystem (6b, 8b) acts as backup for writes to the cache (12a) of the first subsystem (6a, 8a) not destaged to the storage device, the method comprising:
detecting an event during which processing of writes to the storage device (6a, 6b) is suspended;
in response to detecting the event, scanning the caches (12a, 12b) of the first and second subsystems to determine for each subsystem the data units having modified data;
for each subsystem, storing an indication of the data units having the modified data in the backup storage (14a, 14b) of that subsystem; and
using the stored indication of the data units having the modified data in the backup storages (14a, 14b) during a recovery operation.

2. The method of claim 1, wherein the detected event comprises a notification of a power failure and wherein the operations of scanning the cache and storing the indication of the data units having the modified data in the backup storage are performed using power from a backup battery.

3. The method of claim 1 or 2, further comprising:
writing the indication of the data units having the modified data from the backup storage to the storage device.

4. The method of claim 1, 2 or 3 wherein the backup storage comprises a non-volatile storage device having a separate battery power source from a system including the cache and the backup storage.

5. The method of claim 1, further comprising:
initiating an operation to destage the modified data in the first and second backup storages to the storage device during the recovery operation.

6. The method of claim 1, wherein using the indication of the data units having modified data in the first and second backup storages comprises:
using indication of the data units having modified data in the second cache in the second backup storage during the recovery operation in response to determining that the first backup storage is unavailable to use to recover the modified data in the second cache; and
using indication of the data units having the modified data in the first cache in the first backup storage during the recovery operation in response to determining that the second backup storage is unavailable to use to recover the modified data in the storage cache.

7. The method of claim 6, wherein using the indication of the data units having the modified data in the first or the second cache comprises recovering the indication of the data units having the modified data.

8. A system in communication with a storage device (6a, 6b), comprising:
first and second subsystems (6a, 8a; 6b, 8b), each including a cache (12a, 12b), backup storage (14a, 14b) and storage manager (16a, 16b) in communication with the cache (12a, 12b) and the backup storage (14a, 14b), wherein the backup storage (14a) of a first subsystem acts as backup for writes to the cache (12b) of a second subsystem not destaged to the storage device, and the backup storage (14b) of the second subsystem acts as backup for writes to the cache (12a) of the first subsystem not destaged to the storage device and wherein the storage manage (16a, 16b) of each subsystem is operable to perform operations, the operations comprising:
detecting an event during which processing of writes to the storage device (16a, 6b) is suspended;
in response to detecting the event, scanning the caches (12a, 12b) of the first and second subsystems to determine for each subsystem the data units having modified data;
for each subsystem, storing an indication of the data units having the modified data in the backup storage (14a, 14b) of that subsystem; and
using the stored indication of the data units having the modified data in the backup storages (14a, 14b) during a recovery operation.

9. The system of claim 8, wherein the detected event comprises a notification of a power failure and wherein the operations of scanning the cache and storing the indication of the data units having the modified data in the backup storage are performed using power from a backup battery.

10. The system of claim 8 or 9, wherein the operations further comprise:
writing the indication of the data units having the modified data from the backup storage to the storage device.

11. The system of claim 8,9 or 10, wherein the backup storage comprises a non-volatile storage device having a separate battery power source from a system including the cache and the backup storage.

12. The system of claim 8, wherein the first and second storage managers are further operable to perform:
initiating an operation to destage the modified data in the first and second backup storages to the storage device during the recovery operation.

13. The system of claim 8, wherein using the indication of the data units having modified data in the first and second backup storages comprises:
using indication of the data units having modified data in the second cache in the second backup storage during the recovery operation in response to determining that the first backup storage is unavailable to use to recover the modified data in the second cache; and
using indication of the data units having the modified data in the first cache in the first backup storage during the recovery operation in response to determining that the
second backup storage is unavailable to use to recover the modified data in the storage cache.

14. The system of claim 13, wherein using the indication of the data units having the modified data in the first or the second cache comprises recovering the indication of the data units having the modified data.

15. A computer program for writing data to a storage device (6a, 6b) in storage system comprising first and second subsystem (6a, 8a; 6b, 8b), each subsystem including a cache (12a, 12b) and a backup storage (14a, 14b), wherein the backup storage (14a) of a first subsystem acts as backup for writes to the cache (12b) of a second subsystem not destaged to the storage device, and the backup storage (14b) of the second subsystem acts as backup for writes to the cache (12a) of the first subsystem not destaged to the storage device, the computer program when executed on a computer performing the method of any of claims 1 to 7.

## Patentansprüche

1. Verfahren zum Schreiben von Daten in eine Speichereinheit (6a, 6b) in einem Speichersystem, das erste und zweite Teilsysteme (6a, 8a; 6b, 8b) umfasst, wobei jedes Teilsystem einen Cachespeicher (12a, 12b) und einen Sicherungsspeicher (14a, 14b) enthält, wobei der Sicherungsspeicher (14a) eines ersten Teilsystems (6a, 8a) als Sicherung für Schreibvorgänge in den Cachespeicher (12b) eines zweiten Teilsystems (6b, 8b) fungiert, die nicht in die Speichereinheit ausgespeichert werden, und wobei der Sicherungsspeicher (14b) des zweiten Teilsystems (6b, 8b) als Sicherung für Schreibvorgänge in den Cachespeicher (12a) des ersten Teilsystems (6a, 8a) fungiert, die nicht in die Speichereinheit ausgespeichert werden, wobei das Verfahren Folgendes umfasst:
Erkennen eines Ereignisses, während dessen die Verarbeitung von Schreibvorgängen in die Speichereinheit (6a, 6b) ausgesetzt wird;
auf das Erkennen des Ereignisses hin Abfragen der Cachespeicher (12a, 12b) des ersten und zweiten Teilsystems, um für jedes Teilsystem die Dateneinheiten mit geänderten Daten festzustellen;
für jedes Teilsystem Speichern einer Meldung der Dateneinheiten mit den geänderten Daten im Sicherungsspeicher (14a, 14b) dieses Teilsystems; und
Verwenden der gespeicherten Meldung der Dateneinheiten mit den geänderten Daten in den Sicherungsspeichern (14a, 14b) während eines Wiederherstellungsvorgangs.

2. Verfahren nach Anspruch 1, wobei das erkannte Ereignis einen Hinweis auf einen Stromausfall umfasst und wobei die Vorgänge des Abfragens des Cachespeichers und des Speicherns der Meldung der Dateneinheiten mit den geänderten Daten im Sicherungsspeicher unter Verwendung von Strom aus einer Sicherungsbatterie ausgeführt werden.

3. Verfahren nach Anspruch 1 oder 2, das außerdem Folgendes umfasst:
Schreiben der Meldung der Dateneinheiten mit den geänderten Daten aus dem Sicherungsspeicher in die Speichereinheit.

4. Verfahren nach Anspruch 1, 2 oder 3, wobei der Sicherungsspeicher eine nichtflüchtige Speichereinheit mit einer gesonderten Batteriestromquelle von einem System umfasst, das den Cachespeicher und den Sicherungsspeicher beinhaltet.

5. Verfahren nach Anspruch 1, das außerdem Folgendes umfasst:
Einleiten eines Vorgangs zum Ausspeichern der geänderten Daten im ersten und zweiten Sicherungsspeicher in die Speichereinheit während des Wiederherstellungsvorgangs.

6. Verfahren nach Anspruch 1, wobei die Verwendung der Meldung der Dateneinheiten mit geänderten Daten im ersten und zweiten Sicherungsspeicher Folgendes umfasst:
Verwenden der Meldung der Dateneinheiten mit geänderten Daten im zweiten Cachespeicher im zweiten Sicherungsspeicher während des Wiederherstellungsvorgangs auf die Feststellung hin, dass der erste Sicherungsspeicher nicht für eine Nutzung verfügbar ist, um die geänderten Daten im zweiten Cachespeicher wiederherzustellen; und
Verwenden der Meldung der Dateneinheiten mit den geänderten Daten im ersten Cachespeicher im ersten Sicherungsspeicher während des Wiederherstellungsvorgangs auf die Feststellung hin, dass der zweite Sicherungsspeicher nicht für eine Nutzung verfügbar ist, um die geänderten Daten im Cachespeicher wiederherzustellen.

7. Verfahren nach Anspruch 6, wobei die Verwendung der Meldung der Dateneinheiten mit den geänderten Daten im ersten oder zweiten Cachespeicher die Wiederherstellung der Meldung der Dateneinheiten mit den geänderten Daten umfasst.

8. System im Datenaustausch mir einer Speichereinheit (6a, 6b), das Folgendes umfasst:
erste und zweite Teilsysteme (6a, 8a; 6b, 8b), die jeweils einen Cachespeicher (12a, 12b), einen Sicherungsspeicher (14a, 14b) und eine Speicherverwaltungseinrichtung (16a, 16b) im Datenaustausch mit dem Cachespeicher (12a, 12b) und dem Sicherungsspeicher (14a, 14b) enthalten, wobei der Sicherungsspeicher (14a) eines ersten Teilsystems als Sicherung für Schreibvorgänge in den Cachespeicher (12b) eines zweiten Teilsystems fungiert, die nicht in die Speichereinheit ausgespeichert werden, und wobei der Sicherungsspeicher (14b) des zweiten Teilsystems als Sicherung für Schreibvorgänge in den Cachespeicher (12a) des ersten Teilsystems fungiert, die nicht in die Speichereinheit ausgespeichert werden, und wobei die Speicherverwaltungseinrichtung (16a, 16b) jedes Teilsystems funktionsmäßig in der Lage ist, Vorgänge auszuführen, wobei die Vorgänge Folgendes umfassen:
Erkennen eines Ereignisses während dessen die Verarbeitung von Schreibvorgängen in die Speichereinheit (6a, 6b) ausgesetzt wird;
auf das Erkennen des Ereignisses hin Abfragen der Cachespeicher (12a, 12b) des ersten und zweiten Teilsystems, um für jedes Teilsystem die Dateneinheiten mit geänderten Daten festzustellen;
für jedes Teilsystem Speichern einer Meldung der Dateneinheiten mit den geänderten Daten im Sicherungsspeicher (14a, 14b) dieses Teilsystems; und
Verwenden der gespeicherten Meldung der Dateneinheiten mit den geänderten Daten in den Sicherungsspeichern (14a, 14b) während eines Wiederherstellungsvorgangs.

9. System nach Anspruch 8, wobei das erkannte Ereignis einen Hinweis auf einen Stromausfall umfasst und wobei die Vorgänge des Abfragens des Cachespeichers und des Speicherns der Meldung der Dateneinheiten mit den geänderten Daten im Sicherungsspeicher unter Verwendung von Strom aus einer Sicherungsbatterie ausgeführt werden.

10. System nach Anspruch 8 oder 9, wobei die Vorgänge außerdem Folgendes umfassen:
Schreiben der Meldung der Dateneinheiten mit den geänderten Daten aus dem Sicherungsspeicher in die Speichereinheit.

11. System nach Anspruch 8, 9 oder 10, wobei der Sicherungsspeicher eine nichtflüchtige Speichereinheit mit einer gesonderten Batteriestromquelle von einem System umfasst, das den Cachespeicher und den Sicherungsspeicher beinhaltet.

12. System nach Anspruch 8, wobei die erste und die zweite Speicherverwaltungseinrichtung außerdem funktionsmäßig Folgendes ausführen können:
Einleiten eines Vorgangs zum Ausspeichern der geänderten Daten im ersten und zweiten Sicherungsspeicher in die Speichereinheit während des Wiederherstellungsvorgangs.

13. System nach Anspruch 8, wobei die Verwendung der Meldung der Dateneinheiten mit geänderten Daten im ersten und zweiten Sicherungsspeicher Folgendes umfasst:
Verwenden der Meldung der Dateneinheiten mit geänderten Daten im zweiten Cachespeicher im zweiten Sicherungsspeicher während des Wiederherstellungsvorgangs auf die Feststellung hin, dass der erste Sicherungsspeicher nicht für eine Nutzung verfügbar ist, um die geänderten Daten im zweiten Cachespeicher wiederherzustellen; und
Verwenden der Meldung der Dateneinheiten mit den geänderten Daten im ersten Cachespeicher im ersten Sicherungsspeicher während des Wiederherstellungsvorgangs auf die Feststellung hin, dass der zweite Sicherungsspeicher nicht für eine Nutzung verfügbar ist, um die geänderten Daten im Cachespeicher wiederherzustellen

14. System nach Anspruch 13, wobei die Verwendung der Meldung der Dateneinheiten mit den geänderten Daten im ersten oder zweiten Cachespeicher die Wiederherstellung der Meldung der Dateneinheiten mit den geänderten Daten umfasst.

15. Computerprogramm zum Schreiben von Daten in eine Speichereinheit (6a, 6b) in einem Speichersystem, das erste und zweite Teilsysteme (6a, 6b; 8a, 8b) umfasst, wobei jedes Teilsystem einen Cachespeicher (12a, 12b) und einen Sicherungsspeicher (14a, 14b) enthält, wobei der Sicherungsspeicher (14a) eines ersten Teilsystems als Sicherung für Schreibvorgänge in den Cachespeicher (12b) eines zweiten Teilsystems fungiert, die nicht in die Speichereinheit ausgespeichert werden, und wobei der Sicherungsspeicher (14b) des zweiten Teilsystems als Sicherung für Schreibvorgänge in den Cachespeicher (12a) des ersten Teilsystems fungiert, die nicht in die Speichereinheit ausgespeichert werden, wobei das Computerprogramm bei Ausführung in einem Computer das Verfahren nach irgendeinem der Ansprüche 1 bis 7 ausführt.

## Revendications

1. Procédé d'écriture de données dans une unité de mémoire (6a, 6B) d'un système de mémoire comprenant un premier et un second sous-système (6a, 8a ; 6b, 8b), chaque sous-système incluant une mémoire cache (12a, 12b) et une mémoire de sauvegarde (14a, 14b) dans laquelle la mémoire de sauvegarde (14a) d'un premier sous-système (6a, 8a) sert de sauvegarde pour effectuer des écritures dans la mémoire cache (12b) d'un second sous-système (6b, 8b), désactivées de l'unité de mémoire et la mémoire de sauvegarde (14b) du second sous-système (6a, 8b) sert de sauvegarde pour effectuer des écritures dans la mémoire cache (12a) du premier sous-système (6a, 8a), désactivées de l'unité de mémoire, le procédé comprenant :
la détection d'un événement pendant lequel l'exécution des écritures dans l'unité de mémoire (6a, 6b) est suspendue ;
en réponse à la détection de l'événement, le balayage de la mémoire cache (12a, 12b) du premier sous-système et du second sous-système afin de déterminer pour chaque sous-système les unités de données ayant des données modifiées ;
pour chaque sous-système, le stockage d'une indication des unités de données ayant les données modifiées dans la mémoire de sauvegarde (14a, 14b) du sous-système ; et
l'utilisation de l'indication stockée des unités de données ayant les données modifiées dans la mémoire de sauvegarde (14a, 14b) pendant une opération de sauvegarde.

2. Procédé selon la revendication 1, dans lequel l'événement détecté comprend une notification d'une panne de courant et dans lequel les opérations de balayage de la mémoire cache et le stockage de l'indication des unités de données contenant les données modifiées dans la mémoire de sauvegarde sont effectuées en utilisant le courant d'une batterie de sauvegarde.

3. Procédé selon la revendication 1 ou 2 comprenant en outre l'écriture de l'indication des unités de données ayant les données modifiées provenant de la mémoire de sauvegarde dans l'unité de mémoire.

4. Procédé selon les revendications 1, 2 ou 3, dans lequel la mémoire de sauvegarde comprend une unité de mémoire non-volatile présentant une source de courant alimentée par une batterie séparée depuis un système incluant la mémoire cache et la mémoire de sauvegarde.

5. Procédé selon la revendication 1, comprenant en outre :
le déclenchement d'une opération de désactivation des données modifiées dans la première et la seconde mémoire de sauvegarde à l'unité de sauvegarde pendant l'opération de restauration.

6. Procédé selon la revendication 1, dans lequel l'utilisation de l'indication des unités de données ayant des données modifiées dans la première et la seconde mémoire de sauvegarde comprend :
l'utilisation de l'indication des unités de données ayant des données modifiées dans la seconde mémoire cache de la seconde mémoire de sauvegarde pendant l'opération de restauration en réponse à la constatation que la première mémoire de sauvegarde est indisponible pour une restauration des données modifiées dans la seconde mémoire cache ; et
l'utilisation de l'indication des unités de données ayant les données modifiées dans la première mémoire cache de la première mémoire de sauvegarde pendant l'opération de restauration en réponse à la constatation que la seconde mémoire de sauvegarde est indisponible pour restaurer les données modifiées dans la mémoire cache.

7. Procédé selon la revendication 6, dans lequel l'utilisation des unités de données ayant les données modifiées dans la première ou la seconde mémoire cache comprend la restauration de l'indication des unités de données ayant les données modifiées.

8. Système en communication avec une unité de mémoire (6a, 6b) comprenant :
des premier et second sous-systèmes (6a, 8a ; 6b, 8b), incluant chacun une mémoire cache (12a, 12b), une mémoire de sauvegarde (14a, 14b) et un gestionnaire de sauvegarde (16a, 16b) en communication avec la mémoire cache (12a, 12b) et la mémoire de sauvegarde (14a, 14b), dans lequel la mémoire de sauvegarde (14a) d'un premier sous-système sert de sauvegarde pour des écritures dans la mémoire cache (12b) d'un second sous-système non désactivé de l'unité de mémoire, et la mémoire de sauvegarde (14b) du second sous-système sert de sauvegarde pour des écritures dans la mémoire cache (12a) du premier sous-système non désactivé de l'unité de mémoire et dans lequel le gestionnaire de mémoire (16a, 16b) de chaque sous-système est capable d'effectuer les opérations suivantes :
la détection d'un événement pendant lequel l'exécution des écritures dans l'unité de mémoire (6a, 6b) est suspendue ;
en réponse à la détection de l'événement, le balayage de la mémoire cache (12a, 12b) du premier sous-système et du second sous-système afin de déterminer pour chaque sous-système les unités de données ayant des données modifiées ;
pour chaque sous-système, le stockage d'une indication des unités de données ayant les données modifiées dans la mémoire de sauvegarde (14a, 14b) du sous-système ; et
l'utilisation de l'indication stockée des unités de données ayant les données modifiées dans la mémoire de sauvegarde (14a, 14b) pendant une opération de sauvegarde.

9. Système selon la revendication 8, dans lequel l'événement détecté comprend une notification d'une panne de courant et dans lequel les opérations de balayage de la mémoire cache et le stockage de l'indication des unités de données contenant les données modifiées dans la mémoire de sauvegarde sont effectuées en utilisant le courant d'une batterie de sauvegarde.

10. Procédé selon la revendication 8 ou 9 les opérations comprenant en outre :
l'écriture de l'indication des unités de données ayant les données modifiées provenant de la mémoire de sauvegarde dans l'unité de mémoire.

11. Procédé selon les revendications 8, 9 ou 10, dans lequel la mémoire de sauvegarde comprend une unité de mémoire non-volatile présentant une source de courant de batterie séparée depuis un système incluant la mémoire cache et la mémoire de sauvegarde.

12. Procédé selon la revendication 8, le premier et le second gestionnaire de mémoire pouvant fonctionner afin d'effectuer :
le déclenchement d'une opération de désactivation les données modifiées dans la première et la seconde mémoire de sauvegarde à l'unité de sauvegarde pendant l'opération de restauration.

13. Procédé selon la revendication 8, dans lequel l'utilisation de l'indication des unités de données ayant des données modifiées dans la première et la seconde mémoire de sauvegarde comprend :
l'utilisation de l'indication des unités de données ayant des données modifiées dans la seconde mémoire cache de la seconde mémoire de sauvegarde pendant l'opération de restauration en réponse à la détermination que la première mémoire de sauvegarde est indisponible pour une restauration des données modifiées dans la seconde mémoire cache ; et
l'utilisation de l'indication des unités de données ayant des données modifiées dans la première mémoire cache de la première mémoire de sauvegarde pendant l'opération de restauration en réponse à la constatation que la seconde mémoire de sauvegarde est indisponible pour restaurer les données modifiées dans la mémoire cache.

14. Système selon la revendication 13, dans lequel l'utilisation des unités de données ayant les données modifiées dans la première et la seconde mémoire cache comprend la restauration de l'indication des unités de données ayant les données modifiées.

15. Programme informatique pour écrire les données dans une unité de mémoire (6a, 6b) du système de mémoire comprenant des premier et second sous-systèmes (6a, 8a ; 6b, 8b), incluant chacun une mémoire cache (12a, 12b), une mémoire de sauvegarde (14a, 14b) dans lequel la mémoire de sauvegarde (14b) d'un premier sous-système sert de sauvegarde pour des écritures dans la mémoire cache (12a) d'un second sous-système non désactivé de l'unité de mémoire, et la mémoire de sauvegarde (14b) du second sous-système sert de sauvegarde pour des écritures dans la mémoire cache (12a) du premier sous-système non désactivé de l'unité de mémoire.
